# EUROPEAN PATENT SPECIFICATION

(11) **EP 4 044 173 B1**
(45) Date of publication and mention of the grant of the patent: **18.10.2023**
(21) Application number: 22176933.4
(22) Date of filing: 02.06.2022
(51) Int. Cl.: G10L 13/04, G06F 3/16, G10L 13/033

(54) **METHOD AND APPARATUS FOR TEXT TO SPEECH, ELECTRONIC DEVICE AND STORAGE MEDIUM**
VERFAHREN UND VORRICHTUNG FÜR TEXT-ZU-SPRACHE, ELEKTRONISCHE VORRICHTUNG UND SPEICHERMEDIUM
PROCÉDÉ ET APPAREIL DE CONVERSION DE TEXTE EN PAROLE, DISPOSITIF ÉLECTRONIQUE ET SUPPORT DE STOCKAGE

(30) Priority: 08.06.2021 CN 202110639016
(43) Date of publication of application: 17.08.2022
(73) Proprietor: Apollo Intelligent Connectivity (Beijing) Technology Co., Ltd., Beijing 100176 (CN)
(72) Inventor: Zhou, Yi, Beijing, 100176 (CN); Chen, Zhen, Beijing, 100176 (CN)
(74) Representative: Maiwald GmbH

(56) References cited:
- WO-A1-2017/213691
- US-A1- 2007 094 029
- US-A1- 2014 336 919
- US-A1- 2018 011 680

## Description

### TECHNICAL FIELD

The disclosure relates to the field of artificial intelligence (AI) technologies, specifically to the field of speech technologies and Internet of vehicles technologies, and particularly to a method and an apparatus for text to speech (TTS), a computer program product and a storage medium.

### BACKGROUND

With the development and popularization of computer technologies, AI technologies such as human-computer interaction provide convenient and rapid services in all aspects of people's life. TTS may convert text to speech, which is an important human-computer interaction technology in AI technologies. TTS is widely applied in smart terminal devices, for example, vehicle smart terminals. WO 2017/213691 A1 discloses an audio announcement prioritisation system.

### SUMMARY

A method and an apparatus for TTS, a computer program product and a storage medium are provided in the disclosure.

The invention is defined in independent claims 1, 7, 12 and 13. Optional features are subject of the dependent claims.

It should be understood that, the content described in the part is not intended to identify key or important features of embodiments of the disclosure, nor intended to limit the scope of the disclosure. Other features of the disclosure will be easy to understand through the following specification.

### BRIEF DESCRIPTION OF THE DRAWINGS

The drawings are intended to better understand the solution, and do not constitute a limitation to the disclosure.
FIG. 1 is a diagram according to a first embodiment of the disclosure.
FIG. 2 is a diagram according to a second embodiment of the disclosure.
FIG. 3 is a diagram according to a third embodiment of the disclosure.
FIG. 4 is a diagram according to a fourth embodiment of the disclosure.
FIG. 5 is a diagram according to a fifth embodiment of the disclosure.
FIG. 6 is a diagram according to a sixth embodiment of the disclosure.
FIG. 7 is a diagram illustrating a method for TTS according to some embodiments of the disclosure.
FIG. 8 is a diagram according to a seventh embodiment of the disclosure.
FIG. 9 is a block diagram illustrating an electronic device configured to achieve a method for TTS, in some embodiments of the disclosure. The embodiment of FIG. 1 does not include the claimed priority list, it is not covered by the claims. The embodiments of FIGS. 2 and 8 are covered by the claims. The embodiments of FIGS. 3 to 7 and 9 are covered by the claims only when they are understood to include the claimed priority list.

### DETAILED DESCRIPTION

Embodiments of the disclosure are described as below with reference to the drawings, which include various details of the embodiments of the disclosure to facilitate understanding, and should be considered as merely exemplary. Therefore, those skilled in the art should realize that various changes and modifications may be made to the embodiments described herein without departing from the scope of the disclosure. Similarly, for clarity and conciseness, descriptions of well-known functions and structures are omitted in the following descriptions.

With the development and popularization of computer technologies, AI technologies such as human-computer interaction provide convenient and rapid services in all aspects of people's life. TTS may convert text to speech, which is an important human-computer interaction technology in AI technologies. TTS is widely applied in smart terminal devices, for example, vehicle smart terminals.

In the related art, a plurality of applications (APPs) on a terminal device are installed with TTS functions and TTS engines are correspondingly configured for TTSs. However, the plurality of APPs on the terminal device are installed with the TTS functions, so that the plurality of APPs may perform TTSs at the same time in an uncontrollable sequence, and TTSs may be interrupted frequently, resulting in valid information being omitted, or, the plurality of TTSs may be performed at the same time, with chaotic sound and a poor user experience.

For the above problem, a method and an apparatus for TTS, a computer program product and a storage medium are provided in the disclosure.

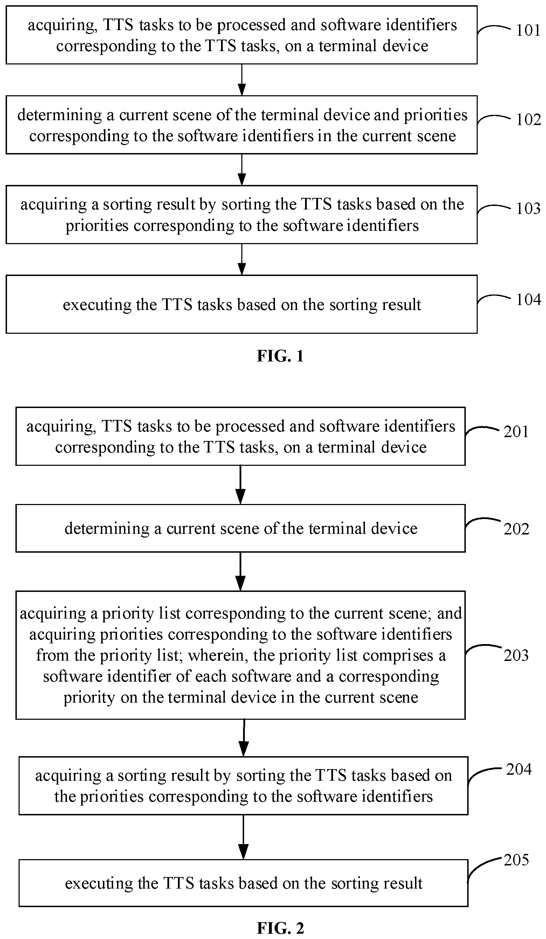

FIG. 1 is a diagram according to a first embodiment of the disclosure. It should be noted that, the method for TTS in some embodiments of the disclosure may be applied to an apparatus for TTS. The apparatus for TTS may be software (for example, a TTS Manager) for controlling a player, which may interact with other software on the terminal device to acquire TTSs that needs to be performed from other software on the terminal device and control the player for TTSs.

As illustrated in FIG. 1, the method for TTS may include the following.

At 101, TTS tasks to be processed and software identifiers corresponding to the TTS tasks, on a terminal device, are acquired.

In some embodiments of the disclosure, the apparatus for TTS may interact with software having TTS tasks on the terminal device, acquire the TTSs needing to be performed in the software and take the TTSs needing to be performed in the software as the TTS tasks to be processed. At the same time, for each TTS task, the corresponding software identifier may be acquired, and the software identifier may be configured to identify the software on the terminal device. For example, an identifier A may represent navigation software, an identifier B may represent video software and an identifier C may represent music software.

At 102, a current scene of the terminal device and priorities corresponding to the software identifiers in the current scene are determined.

Further, after the software identifier corresponding to each TTS is obtained, the apparatus for TTS may determine the current scene of the terminal device based on an environment where the terminal device is located and the priorities corresponding to the software identifiers in the current scene. For example, when a current vehicle is driving at a high speed, it may be determined that the current scene of the terminal device is a driving state, and a priority of navigation software is highest, a priority of music software is lower and a priority of video software is lowest.

At 103, a sorting result is acquired by sorting the TTS tasks based on the priorities corresponding to the software identifiers.

Further, the sorting result is acquired by sorting the TTS tasks corresponding to the software identifiers based on the priorities corresponding to the software identifiers. For example, the TTS task corresponding to the software identifier with the highest priority may rank at the foremost of the sorting result, and the TTS task corresponding to the software identifier with the lowest priority may rank at the backmost of the sorting result.

At 104, the TTS tasks are executed based on the sorting result.

In some embodiments of the disclosure, the TTS tasks in the sorting result may be executed sequentially based on the sorting result of the TTS tasks, for example, the TTS task at the foremost of the sorting result may be executed first, and the TTS task at the backmost of the sorting result may be executed finally. It should be noted that, in the process of executing the TTS tasks, if executing one TTS task in the sorting result is completed, this TTS task may be deleted from the sorting result, to avoid the TTS task that has been executed being executed again. Further, it may be determined whether the current scene of the terminal device changes. The remaining TTS tasks in the sorting result may continue to be executed based on the current sequence in response to the current scene of the terminal device not changing. For the remaining TTS tasks in the sorting result, the priorities corresponding to the software identifiers may be redetermined based on the current scene of the terminal device in response to the current scene of the terminal device changing, a sorting result may be acquired by sorting the remaining TTS tasks based on the priorities corresponding to the software identifiers, and the remaining TTSs may be executed based on the sorting result.

In summary, the TTS tasks to be processed and the software identifiers corresponding to the TTS tasks on the terminal device are acquired; the current scene of the terminal device and the priorities corresponding to the software identifiers in the current scene are determined; the sorting result is acquired by sorting the TTS tasks based on the priorities corresponding to the software identifiers; and the TTS tasks are executed based on the sorting result. Therefore, the TTS tasks may be managed in a unified manner, and the priorities corresponding to the software identifiers and the sorting result of the TTS tasks may be dynamically determined based on the current scene of the terminal device, so that the TTS tasks may be performed based on the sorting result, which improves the user experience.

To dynamically determine the priorities corresponding to the software identifiers, as illustrated in FIG. 2, FIG. 2 is a diagram according to a second embodiment of the disclosure. In some embodiments of the disclosure, a priority list corresponding to the current scene may be acquired by querying, and according to an embodiment which is covered by the claims, the priorities corresponding to the software identifiers are determined based on the current scene of the terminal device. Some embodiments of the disclosure as illustrated in FIG. 2 may include the following.

At 201, TTS tasks to be processed and software identifiers corresponding to the TTS tasks, on a terminal device, are acquired.

At 202, a current scene of the terminal device is determined.

At 203, a priority list corresponding to the current scene is acquired, and priorities corresponding to the software identifiers are acquired from the priority list; in which the priority list includes a software identifier of each software and a corresponding priority on the terminal device in the current scene.

In some embodiments of the disclosure, different priority lists corresponding to different scenes may be preconfigured. The priority lists may be queried based on the current scene to acquire the priority list corresponding to the current scene and the priorities corresponding to the software identifiers may be acquired from the acquired priority list. It should be noted that, the priority list includes the software identifier of each software on the terminal device in the current scene and the corresponding priority.

At 204, a sorting result is acquired by sorting the TTS tasks based on the priorities corresponding to the software identifiers.

At 205, the TTS tasks are executed based on the sorting result.

It needs to be noted that, 201 to 202 and 204 to 205 may be implemented in any manner of embodiments of the disclosure, which is not limited and repeated herein.

In summary, according to an embodiment which is covered by the claims, the TTS tasks to be processed and the software identifiers corresponding to the TTS tasks on the terminal device are acquired; the current scene of the terminal device is determined; the priority list corresponding to the current scene is acquired by querying based on the current scene, and the priorities corresponding to the software identifiers are acquired from the priority list; the priority list includes software identifiers and corresponding priorities on the terminal device in the current scene; the sorting result is acquired by sorting the TTS tasks based on the priorities corresponding to the software identifiers; and the TTS tasks are executed based on the sorting result. Therefore, the TTS tasks may be managed in a unified manner, and the priorities corresponding to the software identifiers and the sorting result of the TTS tasks may be dynamically determined based on the current scene of the terminal device, so that the TTS tasks may be performed based on the sorting result, which improves the user experience.

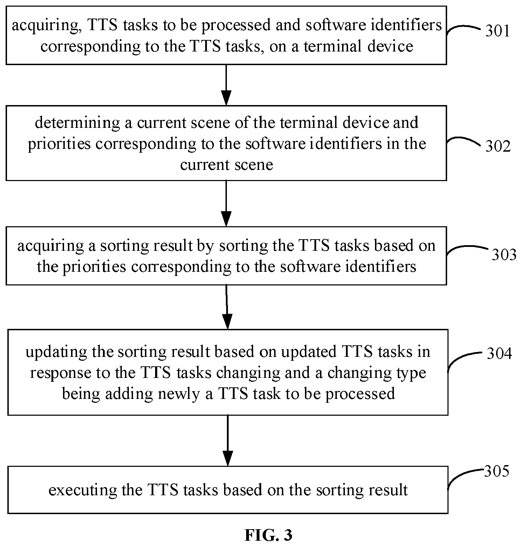

To exactly determine the sorting result of the TTS tasks, the TTS tasks are managed in a unified manner, as illustrated in FIG. 3. FIG. 3 is a diagram according to a third embodiment of the disclosure. In some embodiments of the disclosure, the sorting result of the TTS tasks may be updated in response to newly adding a TTS task to be processed. The embodiments as illustrated in FIG. 3 may include the following.

At 301, TTS tasks to be processed and software identifiers corresponding to the TTS tasks, on a terminal device, are acquired.

At 302, a current scene of the terminal device and priorities corresponding to the software identifiers in the current scene are determined.

At 303, a sorting result is acquired by sorting the TTS tasks based on the priorities corresponding to the software identifiers.

At 304, the sorting result is updated based on updated TTS tasks in response to the TTS tasks to be processed changing and a changing type being adding newly a TTS task to be processed.

That is, the sorting result may be updated first by adopting different manners based on whether the current scene of the terminal devices changes. As one example, when the current scene of the terminal device does not change, the apparatus for TTS acquires a newly added TTS task to be processed from the APP of the terminal device, acquires a software identifier corresponding to the newly added TTS task to be processed, and determines the priority corresponding to the software identifier corresponding to the newly added TTS task to be processed based on the current scene, and adds the newly added TTS task to be processed to the sorting result based on the priority corresponding to the software identifier corresponding to the newly added TTS task to be processed, to update the sorting result, and executes the TTS tasks based on the updated sorting result.

As another example, when the current scene of the terminal device changes, the apparatus for TTS may acquire a newly added TTS task to be processed from the APP of the terminal device, redetermine the TTS tasks in the current sorting result and the newly added TTS task to be processed as the TTS tasks to be processed, and acquire the priorities corresponding to the software identifiers corresponding to the TTS tasks to be processed, and sort the TTS tasks to be processed based on the priorities corresponding to the software identifiers corresponding to the TTS tasks, to obtain the sorting result, and execute the TTS tasks based on the sorting result.

At 305, the TTS tasks are executed based on the sorting result.

It needs to be noted that, 301 to 303 and 305 may be implemented in any manner of embodiments of the disclosure, which is not limited and repeated herein.

In summary, the TTS tasks to be processed and the software identifiers corresponding to the TTS tasks on the terminal device are acquired; the current scene of the terminal device and the priorities corresponding to the software identifiers in the current scene are determined; the sorting result is acquired by sorting the TTS tasks based on the priorities corresponding to the software identifiers; the TTS tasks are executed based on the sorting result; and the sorting result is updated based on the updated TTS tasks in response to the TTS tasks to be processed changing and the changing type being adding newly the TTS task to be processed. Therefore, the TTS tasks may be managed in a unified manner, and the priorities corresponding to the software identifiers and the sorting result of the TTS tasks may be dynamically determined based on the current scene of the terminal device, so that the TTS tasks may be performed based on the sorting result, which improves the user experience.

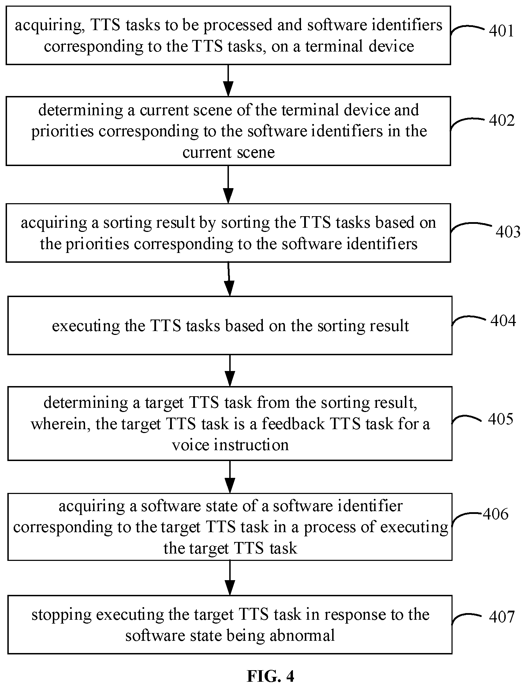

To further improve the user experience, as illustrated in FIG. 4, FIG. 4 is a diagram according to a fourth embodiment of the disclosure. In some embodiments of the disclosure, a feedback TTS task for a voice instruction in the sorting result may be determined, and it may be determined whether a software state of a software identifier corresponding to the feedback TTS task for the voice instruction is abnormal in a process of executing the feedback TTS task for the voice instruction; and it stops executing the feedback TTS task for the voice instruction in response to the software state being abnormal. Some embodiments of the disclosure as illustrated in FIG. 4 may include the following.

At 401, TTS tasks to be processed and software identifiers corresponding to the TTS tasks, on a terminal device, are acquired.

At 402, a current scene of the terminal device and priorities corresponding to the software identifiers in the current scene are determined.

At 403, a sorting result is acquired by sorting the TTS tasks based on the priorities corresponding to the software identifiers.

At 404, the TTS tasks are executed based on the sorting result.

At 405, a target TTS task is determined from the sorting result, in which the target TTS task is a feedback TTS task for a voice instruction.

In some embodiments of the disclosure, the target TTS task in the sorting result is determined based on the content of the TTS task. It needs to be noted that, the target TTS task is the feedback TTS task for the voice instruction, for example, a user sends a voice instruction "play music", and the feedback TTS task for the voice instruction is "ok, wait a moment".

At 406, a software state of a software identifier corresponding to the target TTS task is acquired in a process of executing the target TTS task.

Further, the software state of the software identifier corresponding to the target TTS task may be acquired in the process of executing the target TTS task, for example, the software state of the software identifier corresponding to the feedback TTS task for the voice instruction may be acquired in response to executing the feedback TTS task "ok, wait a moment" for the voice instruction.

At 407, it stops executing the target TTS task in response to the software state being abnormal.

That is, the target TTS task is stopped to be executed when the voice instruction may not be executed in response to the software state being abnormal.

It needs to be noted that, 401 to 404 may be implemented in any manner of embodiments of the disclosure, which is not limited and repeated herein.

In summary, the TTS tasks to be processed and the software identifiers corresponding to the TTS tasks on the terminal device are acquired; the current scene of the terminal device and the priorities corresponding to the software identifiers in the current scene are determined; the sorting result is acquired by sorting the TTS tasks based on the priorities corresponding to the software identifiers; the TTS tasks are executed based on the sorting result; the target TTS task in the sorting result is acquired, in which the target TTS task is the feedback TTS task for the voice instruction; the software state of the software identifier corresponding to the target TTS task is acquired in the process of executing the target TTS task; and the target TTS task is stopped to be executed in response to the software state being abnormal. Therefore, the TTS tasks may be managed in a unified manner, and the priorities corresponding to the software identifiers and the sorting result of the TTS tasks may be dynamically determined based on the current scene of the terminal device, so that the TTS tasks may be performed based on the sorting result, and the target TTS task is stopped to be executed in response to the software state being abnormal, which improves the user experience.

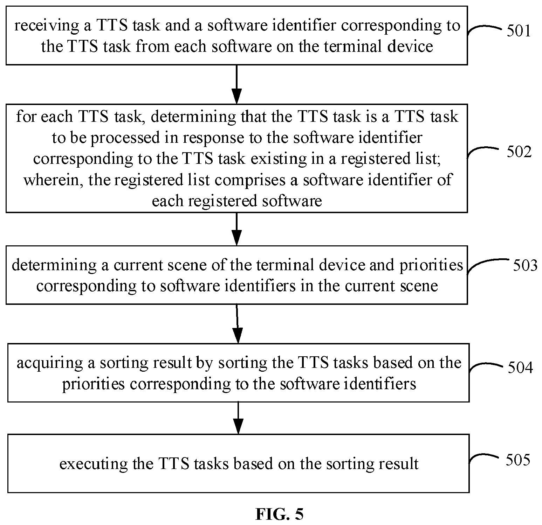

To uniformly process the TTS task from each software on the terminal device, and understand the software state of each software on the terminal device in real time, as illustrated in FIG. 5, FIG. 5 is a diagram according to a fifth embodiment of the disclosure. In some embodiments of the disclosure, for each TTS task, it is determined that the TTS task is a TTS task to be processed in response to a software identifier corresponding to the TTS task existing in a registered list. Some embodiments of the disclosure as illustrated in FIG. 5 may include the following.

At 501, a TTS task and a software identifier corresponding to the TTS task from each software on a terminal device are received.

It needs to be understood that, the software having the TTS task requirement on the terminal device may be registered in the registered list of the apparatus for TTS, and the TTS task corresponding to the registered software is determined as the TTS task that needs to be processed, and at the same time, the apparatus for TTS may understand the software state of the registered software in time based on the registration information.

In some embodiments of the disclosure, each software on the terminal device may send the TTS task to the apparatus for TTS, and may send the software identifier of the software itself to the apparatus for TTS at the same time. The apparatus for TTS may acquire the software identifier corresponding to the TTS task in response to receiving the TTS task from each software on the terminal device.

At 502, for each TTS task, it is determined that the TTS task is a TTS task to be processed in response to the software identifier corresponding to the TTS task existing in a registered list; in which the registered list includes a software identifier of each registered software.

Further, it may be determined whether the software identifier corresponding to the TTS task exists in the registered list for the TTS task in response to receiving the TTS task from each software on the terminal device. The TTS task is determined as the TTS task to be processed in response to the software identifier corresponding to the TTS task existing in the registered list, and the apparatus for TTS may process the TTS task in response to the software state of the software identifier corresponding to the TTS task being normal. It should be noted that, the registered list includes the software identifier of each registered software.

At 503, a current scene of the terminal device and priorities corresponding to software identifiers in the current scene are determined.

At 504, a sorting result is acquired by sorting the TTS tasks based on the priorities corresponding to the software identifiers.

At 505, the TTS tasks are executed based on the sorting result.

In some embodiments of the disclosure, blocks 503 to 505 may be achieved by any manner of embodiments in the disclosure, which are not limited nor repeated herein.

In summary, the TTS task and the software identifier corresponding to the TTS task from each software on the terminal device are received; the TTS task is determined as the TTS task to be processed in response to the software identifier corresponding to the TTS task existing in the registered list; in which the registered list includes the software identifier of each registered software; the current scene of the terminal device and the priorities corresponding to the software identifiers in the current scene are determined; the sorting result is acquired by sorting the TTS tasks based on the priorities corresponding to the software identifiers; and the TTS tasks are executed based on the sorting result. Therefore, the TTS tasks from each software on the terminal device may be managed in a unified manner, and the priorities corresponding to the software identifiers and the sorting result of the TTS tasks may be dynamically determined based on the current scene of the terminal device, so that the TTS tasks may be performed based on the sorting result, which improves the user experience.

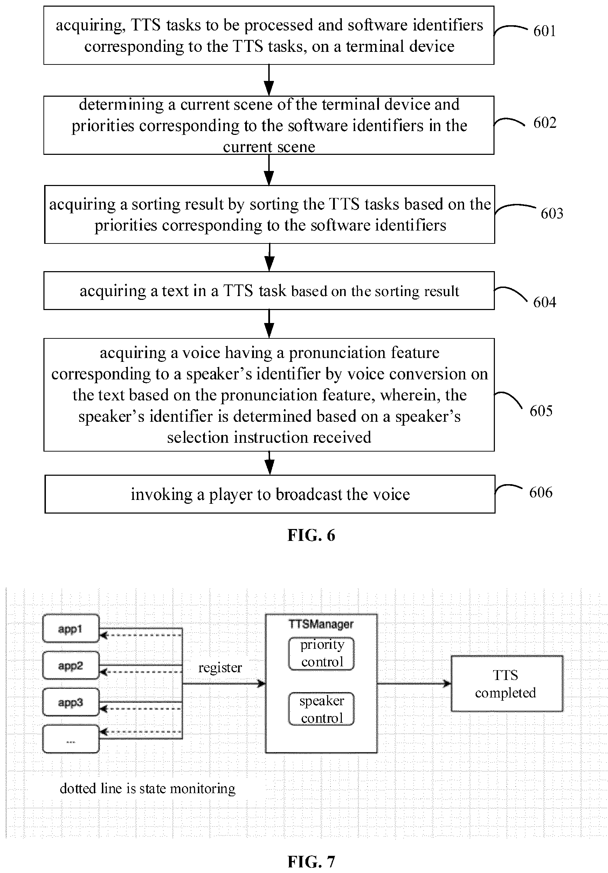

To further improve the user experience, as illustrated in FIG. 6, FIG. 6 is a diagram according to a sixth embodiment of the disclosure. In some embodiments of the disclosure, a speaker's pronunciation may be selected to broadcast a result of the TTS task in response to executing the TTS task. Some embodiments of the disclosure as illustrated in FIG. 6 may include the following.

At 601, TTS tasks to be processed and software identifiers corresponding to the TTS tasks, on a terminal device, are acquired.

At 602, a current scene of the terminal device and priorities corresponding to the software identifiers in the current scene are determined.

At 603, a sorting result is acquired by sorting the TTS tasks based on the priorities corresponding to the software identifiers.

At 604, a text in the TTS task is acquired based on the sorting result.

In some embodiments of the disclosure, a text in each TTS task may be sequentially acquired based on the sorting result of the TTS tasks. The text in the TTS task may be acquired based on the TTS content.

At 605, a voice having a pronunciation feature corresponding to a speaker's identifier is acquired by voice conversion on the text based on the pronunciation feature, in which the speaker's identifier is determined based on a speaker's selection instruction received.

To dynamically adjust the pronunciation of the TTS task, optionally, a user may send the speaker's selection instruction to the apparatus for TTS, and the apparatus for TTS may determine the speaker's identifier based on the speaker's selection instruction, and further acquire the voice having the pronunciation feature corresponding to the speaker's identifier by voice conversion on the text based on the pronunciation feature.

At 606, a player is invoked to broadcast the voice.

Further, the apparatus for TTS may invoke the player to broadcast the voice having the pronunciation feature.

In some embodiments of the disclosure, 601 to 603 may be achieved by any manner of embodiments in the disclosure, which is not limited and repeated herein.

In summary, the TTS tasks to be processed and the software identifiers corresponding to the TTS tasks on the terminal device are acquired; the current scene of the terminal device and the priorities corresponding to the software identifiers in the current scene are determined; the sorting result is acquired by sorting the TTS tasks based on the priorities corresponding to the software identifiers; the TTS tasks are executed based on the sorting result; the text in the TTS task is acquired based on the sorting result; the voice having the pronunciation feature corresponding to the speaker's identifier is acquired by voice conversion on the text based on the pronunciation feature, in which the speaker's identifier is determined based on the speaker's selection instruction received; and the player is invoked to broadcast the voice. Therefore, the TTS tasks from each software on the terminal device may be processed in a unified manner, and the priorities corresponding to the software identifiers and the sorting result of the TTS tasks may be dynamically determined based on the current scene of the terminal device, and the pronunciation of broadcasting the result of the TTS task may be adjusted based on the speaker's identifier, so that the TTS tasks may be performed based on the sorting result and the pronunciation feature corresponding to the speaker's identifier, which improves the user experience.

In order to make those skilled in the art understand the disclosure more clearly, it may be illustrated by taking an example.

As illustrated in FIG. 7, taking the apparatus for TTS being a TTS Manager for an example, the APPs (for example, app1, app2, app3) having the TTS task requirement on the terminal device may be preregistered in the registered list of the apparatus for TTS, and the TTS Manager may monitor a state of a registered APP and acquire whether the state of the APP is normal. The APPs on the terminal device may send TTS tasks to the TTS Manager, and the TTS Manager may receive the TTS tasks from the APPs on the terminal device and determine whether a software identifier corresponding to each TTS task received exists in the registered list. The TTS task is determined as a TTS task to be processed in response to the software identifier corresponding to the TTS task existing in the registered list. The TTS Manager may determine priorities corresponding to the APPs based on the current scene of the terminal device, and obtain a sorting result by sorting the TTS tasks to be processed based on the priorities corresponding to the APPs, and acquire a text in the TTS task to be processed based on the sorting result. Then, the TTS Manager may determine the speaker's identifier based on the speaker's selection instruction, and further acquire a voice having a pronunciation feature corresponding to the speaker's identifier by voice conversion on the text based on the pronunciation feature, and further invoke a player to play the voice having the pronunciation feature. When the TTS Manager executes a feedback TTS task for a voice instruction, it stops executing the feedback TTS task for the voice instruction stops in response to the software state of the APP corresponding to the feedback TTS task for the voice instruction being abnormal.

In the method for TTS in some embodiments of the disclosure, the TTS tasks to be processed and the software identifiers corresponding to the TTS tasks on the terminal device are acquired; the current scene of the terminal device and the priorities corresponding to the software identifiers in the current scene are determined; the sorting result is acquired by sorting the TTS tasks based on the priorities corresponding to the software identifiers; and the TTS tasks are executed based on the sorting result. Therefore, the TTS tasks may be managed in a unified manner, and the priorities corresponding to the software identifiers and sorting result of the TTS tasks may be dynamically determined based on the current scene of the terminal device, so that the TTS tasks may be performed based on the sorting result, which improves the user experience.

To achieve the above embodiments, an apparatus for TTS is further provided in the disclosure.

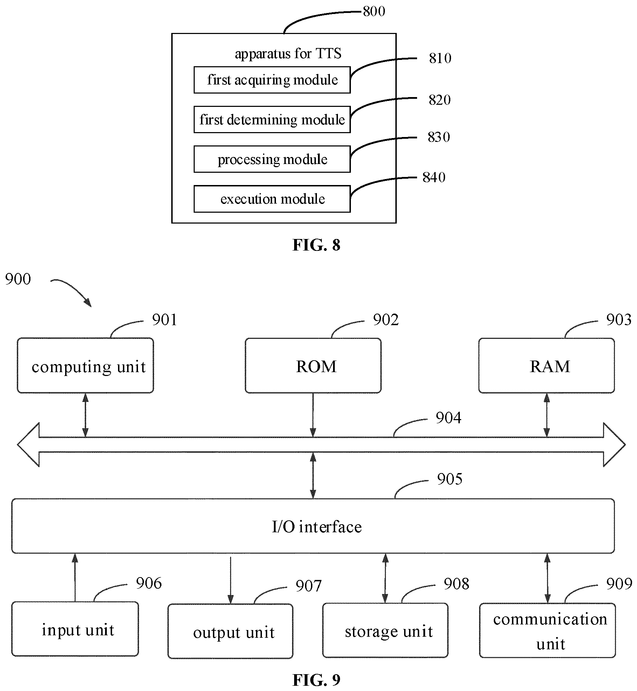

FIG. 8 is a diagram according to a seventh embodiment of the disclosure. As illustrated in FIG. 8, the apparatus 800 for TTS includes a first acquiring module 810, a first determining module 820, a processing module 830 and an execution module 840.

The first acquiring module 810 is configured to acquire, TTS tasks to be processed and software identifiers corresponding to the TTS tasks, on a terminal device; the first determining module 820 is configured to determine a current scene of the terminal device and priorities corresponding to the software identifiers in the current scene; the processing module 840 is configured to acquire a sorting result by sorting the TTS tasks based on the priorities corresponding to the software identifiers; and the execution module 850 is configured to execute the TTS tasks based on the sorting result.

According to an embodiment which is covered by the claims, the first determining module 820 is specifically configured to: determine the current scene of a terminal device; acquire a priority list corresponding to the current scene; and acquire the priorities corresponding to the software identifiers from the priority list; in which the priority list includes a software identifier of each software and a corresponding priority on the terminal device in the current scene.

As a possible implementation of some embodiments of the disclosure, the apparatus for TTS further includes a changing module.

The changing module is configured to update the sorting result based on updated TTS tasks in response to the TTS tasks changing and a changing type being adding newly a TTS task to be processed.

As a possible implementation of some embodiments of the disclosure, the apparatus 800 for TTS further includes a second determining module, a second acquiring module and an exception handling module.

The second determining module is configured to determine a target TTS task from the sorting result, in which the target TTS task is a feedback TTS task for a voice instruction; the second acquiring module is configured to acquire a software state of a software identifier corresponding to the target TTS task in a process of executing the target TTS task; and the exception handling module is configured to stop executing the target TTS task in response to the software state being abnormal.

As a possible implementation of some embodiments of the disclosure, the first acquiring module 810 is configured to: receive a TTS task and a software identifier corresponding to the TTS task from each software on the terminal device; for each TTS task, determine that the TTS task is a TTS task to be processed in response to the software identifier corresponding to the TTS task existing in a registered list; in which, the registered list includes a software identifier of each registered software.

As a possible implementation of some embodiments of the disclosure, the execution module 810 is specifically configured to: acquire a text in the TTS task; acquire a voice having a pronunciation feature corresponding to a speaker's identifier by voice conversion on the text based on the pronunciation feature, in which the speaker's identifier is determined based on a speaker's selection instruction received; and invoke a player to play voice.

In the apparatus for TTS in some embodiments of the disclosure, the TTS tasks to be processed and the software identifiers corresponding to the TTS tasks on the terminal device are acquired; the current scene of the terminal device and the priorities corresponding to the software identifiers in the current scene are determined; the sorting result is acquired by sorting the TTS tasks based on the priorities corresponding to the software identifiers; and the TTS tasks are executed based on the sorting result. Therefore, the TTS tasks may be managed in a unified manner, and the priorities corresponding to the software identifiers and the sorting result of the TTS tasks may be dynamically determined based on the current scene of the terminal device, so that the TTS tasks may be performed based on the sorting result, which improves the user experience.

According to some embodiments of the disclosure, a computer readable storage medium and a computer program product are further provided in the disclosure.

FIG. 9 is a block diagram illustrating an example electronic device 900 according to some embodiments of the disclosure. The electronic devices are intended to represent various types of digital computers, such as laptop computers, desktop computers, workstations, personal digital assistants, servers, blade servers, mainframe computers, and other suitable computers. The electronic devices may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As shown in FIG. 9, the device 900 includes a computing unit 901, configured to execute various appropriate actions and processes according to a computer program stored in a read-only memory (ROM) 902 or loaded from a storage unit 908 to a random-access memory (RAM) 903. In the RAM 903, various programs and data required for the device 900 may be stored. The computing unit 901, the ROM 902 and the RAM 903 may be connected with each other by a bus 904. An input/output (I/O) interface 905 is also connected to the bus 904.

A plurality of components in the device 900 are connected to the I/O interface 905, and include: an input unit 906, for example, a keyboard, a mouse, etc.; an output unit 907, for example various types of displays, speakers; a storage unit 908, for example a magnetic disk, an optical disk; and a communication unit 909, for example, a network card, a modem, a wireless transceiver. The communication unit 909 allows the device 900 to exchange information/data through a computer network such as internet and/or various types of telecommunication networks and other devices.

The computing unit 901 may be various types of general and/or dedicated processing components with processing and computing ability. Some examples of the computing unit 901 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 901 executes various methods and processing as described above, for example, a method for TTS. For example, in some embodiments, the method for TTS may be further implemented as a computer software program, which is physically contained in a machine readable medium, such as the storage unit 908. In some embodiments, a part or all of the computer program may be loaded and/or installed on the device 900 through the ROM 902 and/or the communication unit 909. When the computer program is loaded on the RAM 903 and performed by the computing unit 901, one or more blocks in the method for TTS as described above may be performed. Alternatively, in other embodiments, the computing unit 901 may be configured to perform a method for TTS in other appropriate ways (for example, by virtue of a firmware).

Various implementation modes of systems and technologies described herein may be implemented in a digital electronic circuit system, an integrated circuit system, a field programmable gate array(FPGA), a dedicated application specific integrated circuit (ASIC), a system on a chip (SoC), a load programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the disclosure, a machine-readable medium may be a tangible medium that may contain or store a program intended for use in or in conjunction with an instruction execution system, apparatus, or device. A machine-readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relation between the client and the server is generated by computer programs that run on the corresponding computer and have a client-server relationship with each other. A server further may be a server with a distributed system, or a server in combination with a blockchain.

It should be noted that, Artificial intelligence(AI) is a subject that learns simulating certain thinking processes and intelligent behaviors (such as learning, reasoning, thinking, planning, etc.) of human beings by a computer, which covers hardware-level technologies and software-level technologies. AI hardware technologies generally include technologies such as sensors, dedicated AI chips, cloud computing, distributed storage, big data processing, etc.; AI software technologies mainly include computer vision technology, speech recognition technology, natural language processing(NLP) technology and machine learning(ML), deep learning(DL), big data processing technology, knowledge graph(KG) technology, etc.

## Claims

1. A method for text to speech (TTS), comprising:
Acquiring (201) TTS tasks to be processed and software identifiers corresponding to the TTS tasks, on a terminal device;
determining (202) a current scene of the terminal device;
determining (203) priorities corresponding to the software identifiers in the current scene;
acquiring (204) a sorting result by sorting the TTS tasks based on the priorities corresponding to the software identifiers; and
executing (205) the TTS tasks based on the sorting result,
wherein determining (203) the priorities corresponding to the software identifiers in the current scene comprises:
acquiring (203) a priority list corresponding to the current scene; and
acquiring (203) the priorities corresponding to the software identifiers from the priority list; wherein, the priority list comprises a software identifier of each software and a corresponding priority on the terminal device in the current scene.

2. The method of claim 1, further comprising:
deleting a TTS task that has been executed from the sorting result.

3. The method of any one of claims 1 to 2, further comprising:
updating (304) the sorting result based on updated TTS tasks in response to the TTS tasks changing and a changing type being adding newly a TTS task to be processed.

4. The method of any one of claims 1 to 3, further comprising:
determining (405) a target TTS task from the sorting result, wherein, the target TTS task is a feedback TTS task for a voice instruction;
acquiring (406) a software state of a software identifier corresponding to the target TTS task in a process of executing the target TTS task; and
stopping (407) executing the target TTS task in response to the software state being abnormal.

5. The method of any one of claims 1 to 4, wherein, acquiring (101) the TTS tasks to be processed and the software identifiers corresponding to the TTS tasks, on the terminal device, comprises:
receiving (501) a TTS task and a software identifier corresponding to the TTS task from each software on the terminal device; and
for each TTS task, determining (502) that the TTS task is a TTS task to be processed in response to the software identifier corresponding to the TTS task existing in a registered list; wherein, the registered list comprises a software identifier of each registered software.

6. The method of any one of claims 1 to 5, wherein, a manner of executing the TTS task comprises:
acquiring a text in the TTS task;
acquiring a voice having a pronunciation feature corresponding to a speaker's identifier by voice conversion on the text based on the pronunciation feature, wherein, the speaker's identifier is determined based on a speaker's selection instruction received; and
invoking a player to broadcast the voice.

7. An apparatus for text to speech (TTS), comprising:
a first acquiring module (810), configured to acquire, TTS tasks to be processed and software identifiers corresponding to the TTS tasks, on a terminal device;
a first determining module (820), configured to determine a current scene of the terminal device and priorities corresponding to the software identifiers in the current scene;
a processing module (830), configured to acquire a sorting result by sorting the TTS tasks based on the priorities corresponding to the software identifiers; and
an execution module (840), configured to execute the TTS tasks based on the sorting result,
wherein the first determining module (820) is configured to:
acquire a priority list corresponding to the current scene; and
acquire the priorities corresponding to the software identifiers from the priority list; wherein, the priority list comprises a software identifier of each software and a corresponding priority on the terminal device in the current scene.

8. The apparatus of claim 7, further comprising:
a changing module, configured to update the sorting result based on updated TTS tasks in response to the TTS tasks changing and a changing type being adding newly a TTS task to be processed.

9. The apparatus of any one of claims 7 to 8, further comprising:
a second determining module, configured to determine a target TTS task from the sorting result, wherein, the target TTS task is a feedback TTS task for a voice instruction;
a second acquiring module, configured to acquire a software state of a software identifier corresponding to the target TTS task in a process of executing the target TTS task; and
an exception handling module, configured to stop executing the target TTS task in response to the software state being abnormal.

10. The apparatus of any one of claims 7 to 9, wherein, the first acquiring module (810) is configured to:
receive a TTS task and a software identifier corresponding to the TTS task from each software on the terminal device; and
for each TTS task, determine that the TTS task is a TTS task to be processed in response to the software identifier corresponding to the TTS task existing in a registered list; wherein, the registered list comprises a software identifier of each registered software.

11. The apparatus of any one of claims 7 to 10, wherein, the execution module (840) is configured to:
acquire a text in the TTS task;
acquire a voice having a pronunciation feature corresponding to a speaker's identifier by voice conversion on the text based on the pronunciation feature, wherein, the speaker's identifier is determined based on a speaker's selection instruction received; and
invoke a player to broadcast the voice.

12. A non-transitory computer-readable storage medium stored with computer instructions, wherein, the computer instructions are configured to perform the method of any of claims 1 to 6 when performed by the computer.

13. A computer program product, comprising a computer program, wherein, the computer program is configured to perform the method of any of claims 1 to 6 when performed by a processor.

## Patentansprüche

1. Verfahren für Text-zu-Sprache (TTS), umfassend:
Erfassen (201) von TTS-Aufgaben, die zu verarbeiten sind, und Software-Kennungen entsprechend den TTS-Aufgaben, auf einem Endgerät;
Bestimmen (202) einer aktuellen Szene des Endgeräts;
Bestimmen (203) von Prioritäten entsprechend den Software-Kennungen in der aktuellen Szene;
Erfassen (204) eines Sortierergebnisses durch Sortieren der TTS-Aufgaben basierend auf den Prioritäten entsprechend den Software-Kennungen; und
Ausführen (205) der TTS-Aufgaben basierend auf dem Sortierergebnis wobei das Bestimmen (203) der Prioritäten entsprechend den Software-Kennungen in der aktuellen Szene Folgendes umfasst:
Erfassen (203) einer Prioritätenliste entsprechend der aktuellen Szene; und
Erfassen (203) der Prioritäten entsprechend den Software-Kennungen anhand der Prioritätenliste; wobei die Prioritätenliste eine Software-Kennung jeder Software und eine entsprechende Priorität auf dem Endgerät in der aktuellen Szene umfasst.

2. Verfahren nach Anspruch 1, ferner umfassend:
Löschen einer TTS-Aufgabe, die anhand des Sortierergebnisses ausgeführt worden ist.

3. Verfahren nach einem der Ansprüche 1 bis 2, ferner umfassend:
Aktualisieren (304) des Sortierergebnisses basierend auf aktualisierten TTS-Aufgaben als Reaktion darauf, dass sich die TTS-Aufgaben ändern und ein Änderungstyp eine zu verarbeitende TTS-Aufgabe neu hinzufügt.

4. Verfahren nach einem der Ansprüche 1 bis 3, ferner umfassend:
Bestimmen (405) einer Ziel-TTS-Aufgabe anhand des Sortierergebnisses, wobei die Ziel-TTS-Aufgabe eine Rückmeldungs-TTS-Aufgabe für einen Sprachbefehl ist;
Erfassen (406) eines Softwarezustands einer Software-Kennung entsprechend der Ziel-TTS-Aufgabe in einem Prozess des Ausführens der Ziel-TTS-Aufgabe; und
Stoppen (407) des Ausführens der Ziel-TTS-Aufgabe als Reaktion darauf, dass der Software-Zustand abnormal ist.

5. Verfahren nach einem der Ansprüche 1 bis 4, wobei das Erfassen (101) der TTS-Aufgaben, die zu verarbeiten sind, und der Software-Kennungen entsprechend den TTS-Aufgaben auf dem Endgerät Folgendes umfasst:
Erhalten (501) einer TTS-Aufgabe und einer Software-Kennung entsprechend der TTS-Aufgabe von jeder Software auf dem Endgerät; und
für jede TTS-Aufgabe, Bestimmen (502), dass die TTS-Aufgabe eine zu verarbeitende TTS-Aufgabe ist, als Reaktion darauf, dass die Softwarekennung, die der TTS-Aufgabe entspricht, in einer registrierten Liste vorhanden ist; wobei die registrierte Liste eine Softwarekennung jeder registrierten Software umfasst.

6. Verfahren nach einem der Ansprüche 1 bis 5, wobei eine Art des Ausführens der TTS-Aufgabe Folgendes umfasst:
Erfassen eines Texts in der TTS-Aufgabe;
Erfassen einer Sprache, die ein Aussprachemerkmal aufweist, das der Kennung eines Sprechers entspricht, durch Sprachumwandlung an dem Text basierend auf dem Aussprachemerkmal, wobei die Kennung des Sprechers basierend auf dem erhaltenen Auswahlbefehl eines Sprechers bestimmt wird; und
Aufrufen eines Spielers, um die Sprache zu übertragen.

7. Vorrichtung für Text-zu-Sprache (TTS), umfassend:
ein erstes Erfassungsmodul (810), das konfiguriert ist, um zu verarbeitende TTS-Aufgaben und Software-Kennungen entsprechend den TTS-Aufgaben auf einem Endgerät zu erfassen;
ein erstes Bestimmungsmodul (820), das konfiguriert ist, um eine aktuelle Szene des Endgeräts und Prioritäten entsprechend den Software-Kennungen in der aktuellen Szene zu bestimmen;
ein Verarbeitungsmodul (830), das konfiguriert ist, um ein Sortierergebnis durch Sortieren der TTS-Aufgaben basierend auf den Prioritäten entsprechend den Software-Kennungen zu erfassen; und
ein Ausführungsmodul (840), das konfiguriert ist, um die TTS-Aufgaben basierend auf dem Sortierergebnis auszuführen,
wobei das Bestimmungsmodul (820) konfiguriert ist, um:
eine Prioritätenliste entsprechend der aktuellen Szene zu erfassen; und
die Prioritäten entsprechend den Software-Kennungen anhand der Prioritätenliste zu erfassen;
wobei die Prioritätenliste eine Software-Kennung jeder Software und eine entsprechende Priorität auf dem Endgerät in der aktuellen Szene umfasst.

8. Vorrichtung nach Anspruch 7, ferner umfassend:
ein Änderungsmodul, das konfiguriert ist, um das Sortierergebnis basierend auf aktualisierten TTS-Aufgaben als Reaktion darauf zu aktualisieren, dass sich die TTS-Aufgaben ändern und ein Änderungstyp eine zu verarbeitende TTS-Aufgabe neu hinzufügt.

9. Vorrichtung nach einem der Ansprüche 7 bis 8, ferner umfassend:
ein zweites Bestimmungsmodul, das konfiguriert ist, um eine Ziel-TTS-Aufgabe anhand des Sortierergebnisses zu bestimmen, wobei die Ziel-TTS-Aufgabe eine Rückmeldungs-TTS-Aufgabe für einen Sprachbefehl ist;
ein zweites Erfassungsmodul, das konfiguriert ist, um einen Softwarezustand einer Softwarekennung entsprechend der Ziel-TTS-Aufgabe in einem Prozess des Ausführens der Ziel-TTS-Aufgabe zu erfassen; und
ein Ausführungshandhabungsmodul, das konfiguriert ist, um das Ausführen der Ziel-TTS-Aufgabe als Reaktion darauf, dass der Softwarezustand abnormal ist, zu stoppen.

10. Vorrichtung nach einem der Ansprüche 7 bis 9, wobei das erste Erfassungsmodul (810) konfiguriert ist, um:
eine TTS-Aufgabe und eine Software-Kennung entsprechend der TTS-Aufgabe von jeder Software auf dem Endgerät zu erhalten; und
für jede TTS-Aufgabe, zu bestimmen, dass die TTS-Aufgabe eine zu verarbeitende TTS-Aufgabe ist, als Reaktion darauf, dass die Software-Kennung, die der TTS-Aufgabe entspricht, in einer registrierten Liste vorhanden ist; wobei die registrierte Liste eine Software-Kennung jeder registrierten Software umfasst.

11. Software nach einem der Ansprüche 7 bis 10, wobei das Ausführungsmodul (840) konfiguriert ist, um:
einen Text in der TTS-Aufgabe zu erfassen;
eine Sprache, die ein Aussprachemerkmal aufweist, das der Kennung eines Sprechers entspricht, durch Sprachumwandlung an dem Text basierend auf dem Aussprachemerkmal zu erfassen, wobei die Kennung des Sprechers basierend auf dem erhaltenen Auswahlbefehl eines Sprechers bestimmt wird; und
Aufrufen eines Spielers, um die Sprache zu übertragen.

12. Nichtflüchtiges computerlesbares Speichermedium, das mit Computerbefehlen gespeichert ist, wobei die Computerbefehle konfiguriert sind, um das Verfahren nach einem der Ansprüche 1 bis 6 durchzuführen, wenn es von dem Computer durchgeführt wird.

13. Computerprogrammprodukt, umfassend ein Computerprogramm, wobei das Computerprogramm konfiguriert ist, um das Verfahren nach einem der Ansprüche 1 bis 6 durchzuführen, wenn es von einem Prozessor durchgeführt wird.

## Revendications

1. Procédé pour synthèse vocale de texte (TTS), comprenant :
acquérir (201) des tâches TTS à traiter et des identifiants de logiciel correspondant aux tâches TTS, sur un dispositif terminal ;
déterminer (202) une scène courante du dispositif terminal ;
déterminer (203) des priorités correspondant aux identifiants de logiciel dans la scène courante ;
acquérir (204) un résultat de tri en triant les tâches TTS sur la base des priorités correspondant aux identifiants de logiciel ; et
exécuter (205) les tâches TTS sur la base du résultat de tri,
dans lequel déterminer (203) les priorités correspondant aux identifiants de logiciel dans la scène courante comprend :
acquérir (203) une liste de priorités correspondant à la scène courante ; et
acquérir (203) les priorités correspondant aux identifiants de logiciel à partir de la liste de priorités ; dans lequel, la liste de priorités comprend un identifiant de logiciel de chaque logiciel et une priorité correspondante sur le dispositif terminal dans la scène courante.

2. Procédé de la revendication 1, comprenant en outre :
effacer du résultat de tri une tâche TTS qui a été exécutée.

3. Procédé de l'une quelconque des revendications 1 à 2, comprenant en outre :
actualiser (304) le résultat de tri sur la base de tâches TTS actualisées en réponse aux tâches TTS qui changent et un type changeant étant ajouter nouvellement une tâche TTS à traiter.

4. Procédé de l'une quelconque des revendications 1 à 3, comprenant en outre :
déterminer (405) une tâche TTS cible à partir du résultat de tri, dans lequel, la tâche TTS cible est une tâche TTS de retour pour une instruction vocale ;
acquérir (406) un état de logiciel d'un identifiant de logiciel correspondant à la tâche TTS cible dans un traitement d'exécution de la tâche TTS cible ; et
arrêter (407) l'exécution de la tâche TTS cible en réponse à l'état de logiciel anormal.

5. Procédé de l'une quelconque des revendications 1 à 4, dans lequel acquérir (101) les tâches TTS à traiter et les identifiants de logiciel correspondant aux tâches TTS, sur le dispositif terminal, comprend :
recevoir (501) une tâche TTS et un identifiant de logiciel correspondant à la tâche TTS depuis chaque logiciel sur le dispositif terminal ; et
pour chaque tâche TTS, déterminer (502) que la tâche TTS est une tâche TTS à traiter en réponse à l'identifiant de logiciel correspondant à la tâche TTS existant dans une liste enregistrée ; dans lequel la liste enregistrée comprend un identifiant de logiciel de chaque logiciel enregistré.

6. Procédé de l'une quelconque des revendications 1 à 5, dans lequel, une manière d'exécuter la tâche TTS comprend :
acquérir un texte dans la tâche TTS ;
acquérir une voix ayant une caractéristique de prononciation correspondant à un identifiant de locuteur par conversion vocale sur le texte sur la base de la caractéristique de prononciation, dans lequel, l'identifiant de locuteur est déterminé sur la base d'une instruction de sélection du locuteur reçue ; et
invoquer un lecteur pour diffuser la voix.

7. Appareil pour synthèse vocale de texte (TTS), comprenant :
un premier module d'acquisition (810), configuré pour acquérir des tâches TTS à traiter et des identifiants de logiciel correspondant aux tâches TTS, sur un dispositif terminal ;
un premier module de détermination (820), configuré pour déterminer une scène courante du dispositif terminal et des priorités correspondant aux identifiants de logiciel dans la scène courante ;
un module de traitement (830), configuré pour acquérir un résultat de tri en triant les tâches TTS sur la base des priorités correspondant aux identifiants de logiciel ; et
un module d'exécution (840), configuré pour exécuter les tâches TTS sur la base du résultat de tri,
dans lequel le premier module de détermination (820) est configuré pour :
acquérir une liste de priorités correspondant à la scène courante ; et
acquérir les priorités correspondant aux identifiants de logiciel à partir de la liste de priorités ;
dans lequel, la liste de priorités comprend un identifiant de logiciel de chaque logiciel et une priorité correspondante sur le dispositif terminal dans la scène courante.

8. Appareil de la revendication 7, comprenant en outre :
un module de changement, configuré pour actualiser le résultat de tri sur la base de tâches TTS actualisées en réponse aux tâches TTS qui changent et un type changeant étant ajouter nouvellement une tâche TTS à traiter.

9. Appareil de l'une quelconque des revendications 7 à 8, comprenant en outre :
un deuxième module de détermination, configuré pour déterminer une tâche TTS cible à partir du résultat de tri, dans lequel, la tâche TTS cible est une tâche TTS de retour pour une instruction vocale ;
un deuxième module d'acquisition, configuré pour acquérir un état de logiciel d'un identifiant de logiciel correspondant à la tâche TTS cible dans un traitement d'exécution de la tâche TTS cible ; et
un module de maniement exceptionnel, configuré pour arrêter l'exécution de la tâche TTS cible en réponse à l'état de logiciel anormal.

10. Appareil de l'une quelconque des revendications 7 à 9, dans lequel, le premier module d'acquisition (810) est configuré pour :
recevoir une tâche TTS et un identifiant de logiciel correspondant à la tâche TTS depuis chaque logiciel sur le dispositif terminal ; et
pour chaque tâche TTS, déterminer que la tâche TTS est une tâche TTS à traiter en réponse à l'identifiant de logiciel correspondant à la tâche TTS existant dans une liste enregistrée ; dans lequel la liste enregistrée comprend un identifiant de logiciel de chaque logiciel enregistré.

11. Appareil de l'une quelconque des revendications 7 à 10, dans lequel, le module d'exécution (840) est configuré pour :
acquérir un texte dans la tâche TTS ;
acquérir une voix ayant une caractéristique de prononciation correspondant à un identifiant de locuteur par conversion vocale sur le texte sur la base de la caractéristique de prononciation, dans lequel, l'identifiant de locuteur est déterminé sur la base d'une instruction de sélection du locuteur reçue ; et
invoquer un lecteur pour diffuser la voix.

12. Support de stockage non transitoire lisible par ordinateur stocké avec des instructions d'ordinateur, dans lequel, les instructions d'ordinateur sont configurées pour réaliser le procédé de l'une quelconque des revendications 1 à 6 lorsqu'elles sont exécutées par l'ordinateur.

13. Produit programme informatique comprenant un programme informatique, dans lequel, le programme informatique est configuré pour réaliser le procédé de l'une quelconque des revendications 1 à 6 lorsqu'il est exécuté par un processeur.
